# DEMANDE DE BREVET EUROPEEN

(11) **EP 0 945 306 A1**
(43) Date de publication de la demande: **29.09.1999**
(21) Numéro de dépôt: 99400672.4
(22) Date de dépôt: 19.03.1999
(51) Int. Cl.: B60R 1/00, B60Q 1/00, B60R 1/12

(54) **Système de vision d'accostage d'un véhicule industriel**

(30) Priorité: 24.03.1998 FR 9803619
(71) Demandeur: Renault V.I., 69003 Lyon (FR)
(72) Inventeur: Furnion, Thierry, 69003 Lyon (FR); Nguyen, Hoang Giang, 91130 Ris-Orangis (FR)
(74) Mandataire: Fernandez, Francis

(57) **Abrégé**

L'invention concerne un système de vision d'accostage d'un véhicule industriel doté d'un équipement extérieur, tel qu'un rétroviseur à bras en suspension, du côté opposé au conducteur, comportant:
- une petite caméra électronique numérique (18) intégrée dans le bras du rétroviseur (19), orientée vers le sol, le long de la cabine de pilotage, de façon à couvrir totalement une zone d'ombre (12) située sous le champ de vision latérale (11) du conducteur et l'angle mort (16) du miroir (8) principal de rétrovision le long des roues (6) de la cabine ;
- un écran (22) LCD, dans la cabine de pilotage (3);
- un dispositif d'éclairage d'accostage (23), fixé à l'extérieur de la cabine et destiné à éclairer le sol observé par la caméra pendant la nuit;
- des moyens électroniques (24) de contrôle du fonctionnement du système.

## Description

L'invention concerne un système de vision d'accostage en champ large d'un véhicule industriel, de type camion ou autocar par exemple. La vision d'accostage d'un véhicule industriel est la vision que peut avoir le conducteur de la partie du sol qui se trouve le long de la cabine de pilotage, du côté du passager. Le conducteur ne peut voir cette partie de la route en raison de sa position dans la cabine de pilotage, en hauteur et du côté opposé, même si la portière du côté du passager était entièrement transparente.

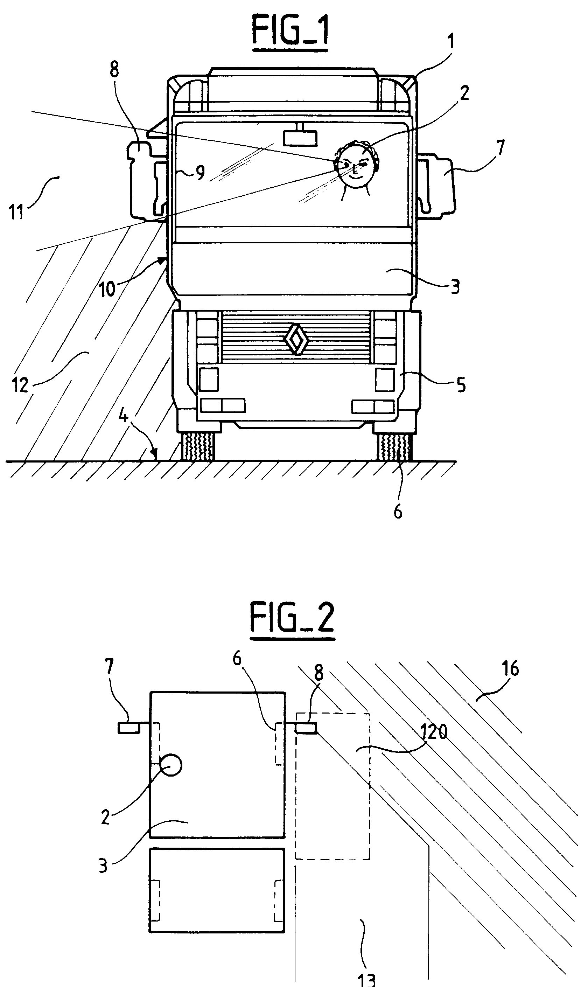

La figure 1, qui est une vue schématique de face d'un véhicule industriel 1, illustre la position d'un conducteur 2 placé dans la cabine de pilotage 3, qui est située en hauteur par rapport au sol 4 au-dessus du châssis 5 et des roues 6.
Le véhicule est équipé de deux rétroviseurs latéraux, un premier 7 du côté du conducteur et un second 8 du côté du passager. A travers la fenêtre 9 de la portière 10 du côté du passager, le conducteur a un certain champ 11 de vision latérale défini par l'ouverture de cette fenêtre. Il existe une zone d'ombre 12 dans la vision que le conducteur a de l'extérieur de la cabine, située sous le champ 11 de vision latérale le long de la cabine de pilotage, vue de face.

La figure 2, qui est une vue schématique de dessus d'un véhicule industriel, illustre la zone 120 de vision d'accostage réglementaire, sur le sol le long de la roue avant 6 du côté du passager, utile pour réaliser en toute sécurité les manoeuvres d'accostage le long d'un quai, d'un trottoir par exemple. La figure montre également la trace au sol du champ de vision 13 d'un rétroviseur latéral. Il subsiste une zone d'ombre 16 le long de la cabine 3, dont la trace au sol est représentée sur la figure 2.

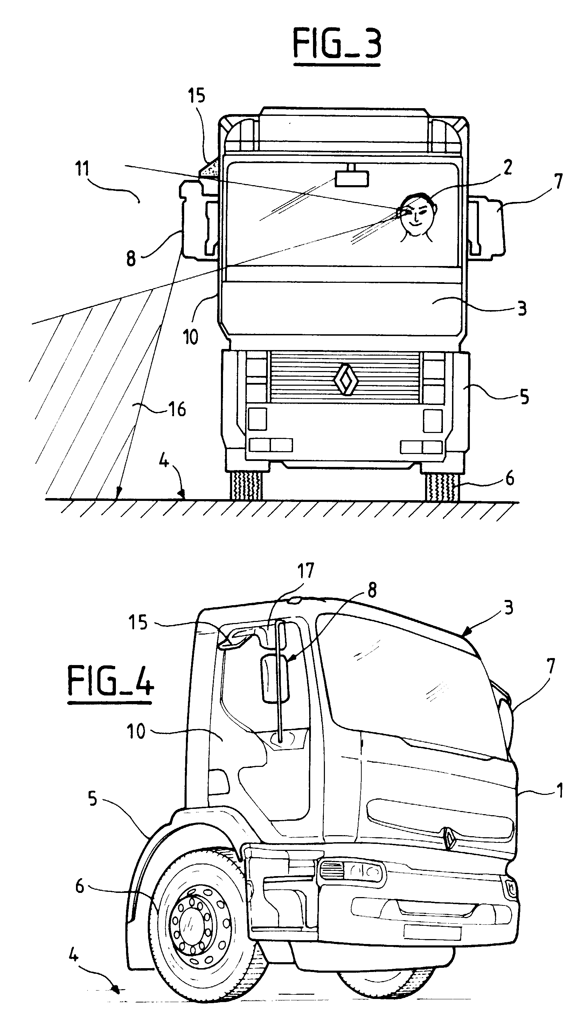

Une solution actuelle pour pallier la zone d'ombre dans le champ de vision d'accostage du conducteur consiste à fixer un miroir 15 au-dessus de la portière 10 du côté du passager, destiné à couvrir la vision directe d'une partie de cette zone d'ombre 12 comme le montre la figure 3 qui est une vue schématique de face d'un véhicule industriel. Un tel miroir est appelé miroir de vision d'accostage. Cependant, la couverture du champ de vision d'accostage assurée par ce miroir classique ne couvre pas totalement la zone d'ombre 12 vue de face et il subsiste une autre zone d'ombre 16 appelée angle mort pour la rétrovision par miroirs classiques.

La figure 4 est une vue en perspective d'une cabine de pilotage 3 d'un véhicule industriel 1, dont le côté passager est doté d'un rétroviseur principal 8, associé à un miroir grand angle 17 et à un miroir d'accostage 15.

Pour résoudre ce problème, l'invention propose un système de vision d'accostage offrant au conducteur d'une part un champ de vision d'accostage plus grand que celui donné par un miroir d'accostage classique et d'autre part un champ de vision latérale, du côté du passager, qui couvre également l'angle mort existant sur les véhicules industriels ou utilitaires actuels.

Ce système de vision d'accostage comprend essentiellement une caméra électronique intégrée dans un équipement extérieur à la cabine de pilotage, au niveau du coin avant supérieur du pavillon du côté opposé au conducteur, associée à des moyens d'éclairage d'une part et à un écran vidéo intérieur d'autre part. Cet équipement peut être soit un rétroviseur à bras en suspension, soit une visière pare-soleil au-dessus du pare-brise, soit un boîtier de signalisation extérieure de changement de direction par feux clignotants.

Pour cela, l'objet de l'invention est un système de vision d'accostage d'un véhicule industriel, doté d'un équipement extérieur dont une partie au moins dépasse du coin avant supérieur du pavillon de la cabine de pilotage placé du côté opposé au conducteur, et d'un rétroviseur portant au moins un miroir principal de rétrovision et un miroir grand angle adjacents, placé du côté opposé au conducteur, caractérisé en ce qu'il comporte :
- une caméra électronique numérique intégrée dans l'équipement extérieur, de dimensions et de poids faibles par rapport à ceux de l'équipement, avec un objectif orienté vers le sol, le long de la cabine de pilotage, de façon à couvrir totalement une zone d'ombre située sous le champ de vision latérale du conducteur et le volume de l'angle mort du miroir principal de rétrovision combiné avec le miroir grand angle le long des roues de la cabine de pilotage ;
- un moniteur vidéo ou écran de type à cristaux liquides, placé à l'intérieur de la cabine de pilotage ;
- un dispositif d'éclairage d'accostage, fixé à l'extérieur de la cabine et destiné à éclairer le sol observé par la caméra pendant la nuit ;
- des moyens électroniques de contrôle du fonctionnement du système, soit de l'alimentation électrique de la caméra, de l'écran et du dispositif d'éclairage, à partir de la batterie du véhicule, et de la visualisation et/ou de la commutation des signaux vidéo.

Selon un premier mode de réalisation, le véhicule industriel est doté d'au moins un rétroviseur à bras en suspension portant au moins un miroir principal de rétrovision et un miroir grand angle adjacents, placé du côté opposé au conducteur, et le système de vision d'accostage est caractérisé en ce qu'il comprend :
- une caméra électronique numérique intégrée dans le bras du rétroviseur, de dimensions et de poids faibles par rapport à ceux du rétroviseur, avec un objectif orienté vers le sol, le long de la cabine de pilotage, de façon à couvrir totalement une zone d'ombre située sous le champ de vision latérale du conducteur et le volume de l'angle mort du miroir principal de rétrovision combiné avec le miroir grand angle le long des roues de la cabine de pilotage ;
- un moniteur vidéo ou écran de type à cristaux liquides, placé à l'intérieur de la cabine de pilotage;
- un dispositif d'éclairage d'accostage, fixé à l'extérieur de la cabine et destiné à éclairer le sol observé par la caméra pendant la nuit;
- des moyens électroniques de contrôle du fonctionnement du système, soit de l'alimentation électrique de la caméra, de l'écran et du dispositif d'éclairage, à partir de la batterie du véhicule, et de la visualisation et/ou de la commutation des signaux vidéo.

Selon un autre mode de réalisation, le système de vision d'accostage est logé dans une partie d'une visière pare-soleil, située dans le prolongement du pavillon devant le pare-brise, cette partie dépassant latéralement.

Selon un troisième mode de réalisation, le système de vision d'accostage est logé dans un boîtier de feux clignotants dépassant latéralement du coin supérieur de la cabine de pilotage, côté passager.

D'autres caractéristiques et avantages de l'invention apparaîtront à la lecture de la description d'un exemple de réalisation, illustrée par les figures 5 à 11. L'ensemble de la description est alors illustré par les figures suivantes qui sont :
- la figure 1 : une vue schématique de face d'un véhicule industriel ;
- la figure 2 : une vue schématique de face d'un véhicule industriel équipé d'un miroir d'accostage classique ;
- la figure 3 : une vue de dessus d'un véhicule industriel avec les traces au sol des champs de vision latéraux du conducteur ;
- la figure 4 : une vue en perspective d'une cabine de pilotage d'un véhicule industriel équipée de miroirs;
- la figure 5 : une vue schématique en coupe d'un système de vision d'accostage selon l'invention, placé dans un rétroviseur à bras en suspension ;
- la figure 6 : une vue schématique de l'arrière de la cabine de pilotage 3 d'un véhicule industriel, équipé du système selon l'invention,
- les figures 7 et 8 : deux variantes d'un bloc d'éclairage d'accostage selon l'invention ;
- la figure 9 : une vue schématique latérale d'une cabine de pilotage, équipée du système selon l'invention ;
- la figure 10 : une vue en perspective d'une cabine de pilotage d'un véhicule industriel équipée d'une visière pare-soleil ;
- la figure 11 : une vue en perspective d'une cabine de pilotage d'un véhicule industriel équipée d'un boîtier de signalisation extérieure de changement de direction ;
- la figure 12 : une vue schématique de dessus d'un véhicule industriel équipé du système selon l'invention.

Les éléments portant les mêmes références sur les différentes figures remplissent les mêmes fonctions en vue des mêmes résultats.

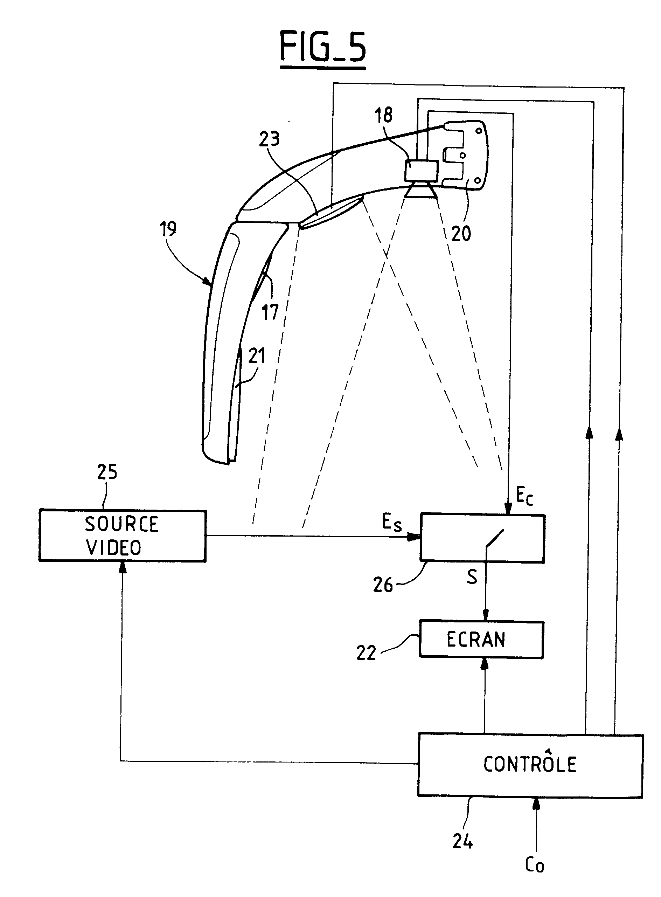

Sur la figure 5, qui est une vue schématique en coupe, sont représentés les éléments constitutifs d'un système de vision d'accostage d'un véhicule industriel selon l'invention, le véhicule étant équipé d'un rétroviseur 19 à bras en suspension. Ces éléments sont :
- une caméra numérique 18, de type CMOS (Complementary Metal Oxide Silicium) ou CCD (Charge Coupled Device), intégrée dans le rétroviseur 19 à bras en suspension, de type "dauphin" par exemple, de faibles dimensions et de poids réduit par rapport à ceux du rétroviseur. Elle est préférentiellement placée entre la charnière d'accrochage 20 du rétroviseur à la cabine de pilotage et le miroir principal 21 du rétroviseur destiné à la vision latérale. Son objectif est orienté vers le sol, le long de la cabine de pilotage.
- un moniteur vidéo ou un écran 22 de type à cristaux liquides LCD (Liquid Cristal Display), placé dans la cabine de pilotage et destiné à visualiser au conducteur l'image délivrée par la caméra 18 de vision d'accostage, c'est-à-dire de la partie extérieure à la cabine, à côté de la roue avant côté passager. Ce moniteur peut être monté sur un dispositif rabattable vers le plafonnier ou vers la planche de bord, lorsque le conducteur n'a pas besoin de la vision d'accostage.
- un dispositif d'éclairage d'accostage 23, destiné à éclairer le sol observé par la caméra pendant la nuit, fixé à l'extérieur de la cabine du véhicule et pouvant être intégré également dans le bras du rétroviseur 19 à bras en suspension, ou bien intégré dans la carrosserie de la cabine, .
- des moyens électroniques 24 de contrôle du fonctionnement du système selon l'invention, en particulier de l'alimentation électrique de la caméra, de l'écran et de l'éclairage, à partir de la batterie du véhicule, et de la visualisation des signaux vidéo.

Dans le cas où le véhicule est équipé d'une autre source d'images vidéo 25, telle qu'un lecteur de bande magnétique ou magnétoscope, analogique ou numérique, ou bien un lecteur de disques compacts de type CD ROM, le système de vision d'accostage selon l'invention doit comporter de plus des moyens 26 de commutation des signaux vidéo, destiné à l'aiguillage des signaux provenant de la caméra CCD 18 ou de ceux provenant de la source vidéo auxiliaire, qui doit également être alimentée électriquement par l'intermédiaire des moyens électroniques 24 de contrôle.

Par l'intermédiaire des moyens électroniques 24 de contrôle, un signal de consigne C_{O} permet de sélectionner les images vidéo qui doivent être affichées sur l'écran LCD 22 en provenance soit de la caméra CCD 18, soit de la source vidéo auxiliaire 25. Cette consigne C_{O} en entrée des moyens électroniques 24 de contrôle permet de commuter l'une ou l'autre des entrées E_{C} ou E_{S} des moyens de commutation 26 reliées respectivement à la caméra 18 et au magnétoscope 25 pour que la sortie S envoie les images sur l'écran 22. La particularité de cette consigne C_{O} est de ne pouvoir sélectionner la source vidéo auxiliaire 25 qu'en cas d'arrêt du moteur du véhicule, le conducteur ne pouvant regarder un film vidéo tout en conduisant son camion ou son autocar. Lorsque le moteur est en marche, seules les images provenant de la caméra 18 de vision d'accostage pourront être sélectionnées. Pour cela, le signal de consigne C_{O} peut provenir par exemple d'un signal d'allumage du moteur.

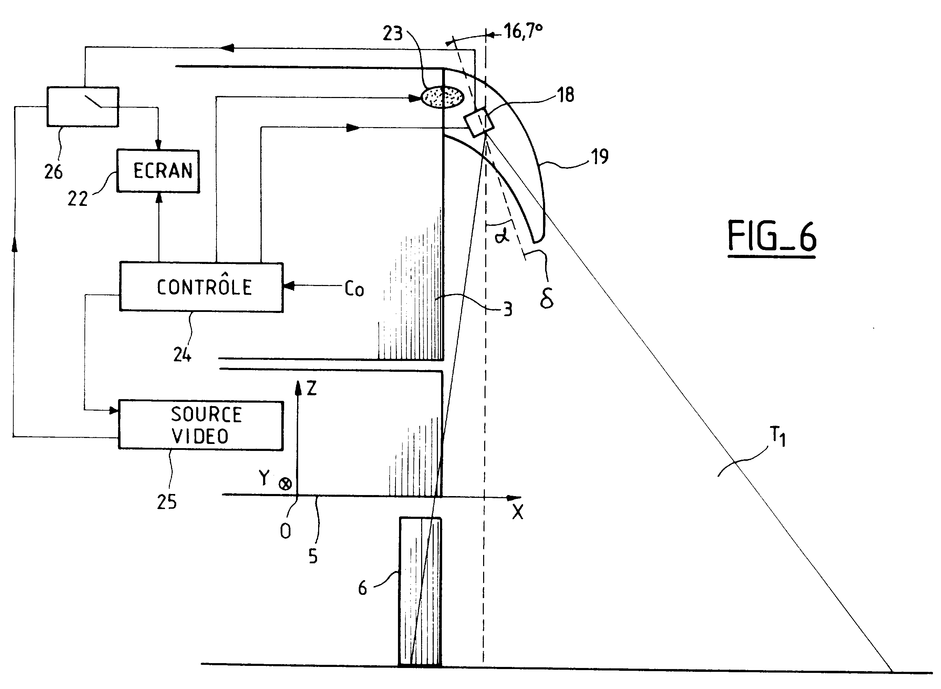

La figure 6 illustre une vue schématique de l'arrière de la cabine de pilotage 3, ou tracteur, du véhicule industriel, équipé du système selon l'invention, sur laquelle est représenté le repère cartésien automobile (O, X, Y, Z), dont l'origine O est au point de concours de l'axe XX' horizontal confondu avec l'axe de l'essieu avant, de l'axe YY' horizontal parallèle à l'axe longitudinal du véhicule passant dans le plan inférieur du châssis, et de l'axe ZZ' vertical passant par le milieu de l'essieu avant. La caméra 18 de vision d'accostage, intégrée au rétroviseur, est orientée vers le sol, vers l'extérieur de la cabine de telle sorte que son axe de visée δ fasse un angle aigu α avec l'axe vertical ZZ' dans le plan perpendiculaire au plan latéral de la cabine de pilotage et passant par le centre de gravité de la caméra. Dans le cas particulier où les coordonnées cartésiennes du centre de gravité de la caméra sont x = 1000 mm, y = 1700 mm et z = 2700 mm, l'angle α est égal préférentiellement à 16,7 degrés. La trace du champ de vision d'accostage dans ce plan est représentée par un triangle T₁.

Le dispositif d'éclairage d'accostage 23 est constitué d'un réseau 28 de diodes électroluminescentes, par exemple de type HP telles que les diodes de référence HP WA-ML00 dont le courant nominal est égal à 70 mA, la longueur d'onde égale à 592 nm diffusant une couleur ambre, un angle de diffusion égal à 95 degrés, une puissance dissipée maximale égale à 190 mW. Chaque diode est un carré de 7,2 mm de côté. Ce réseau de diodes peut être linéaire ou matriciel.

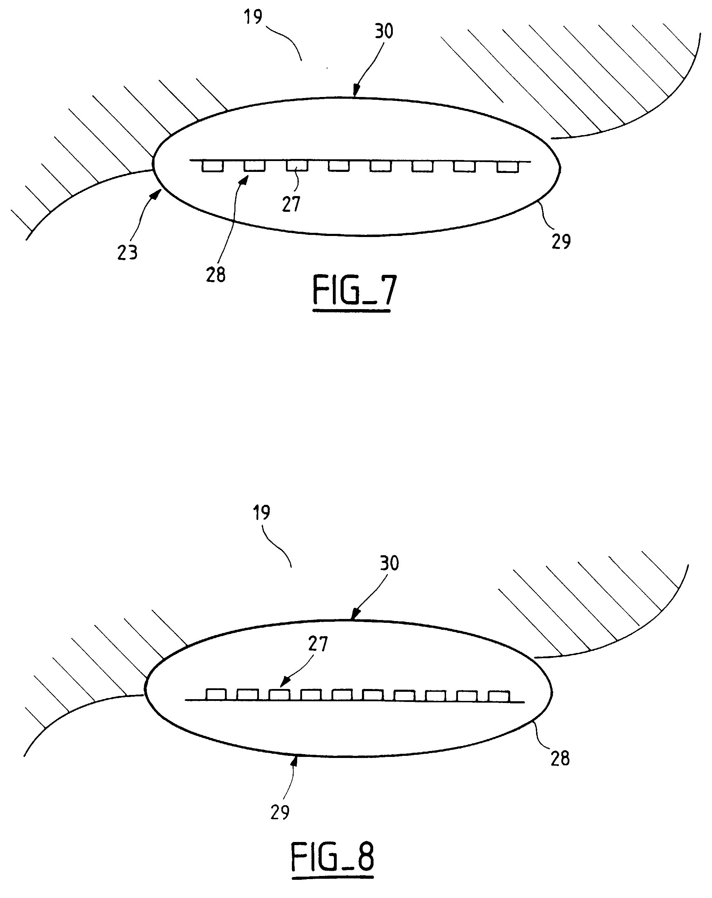

Dans le cas de la figure 7 représentant une coupe d'un bloc d'éclairage 23, les diodes 27 sont montées en position "intrados", c'est-à-dire que leur rayonnement est dirigé vers l'extérieur du boîtier d'éclairage. La part d'énergie renvoyée par le couvercle 29 de protection de la matrice de diodes en polymère se réfléchit sur un réflecteur 30, à surface parabolique ou hyperbolique, disposé derrière la matrice de diodes, rendant ainsi plus efficace l'éclairement des diodes. Pour des raisons d'esthétique, le bloc d'éclairage est fermé par un couvercle 29 en polymère teinté. La matrice de diodes est par exemple linéaire.

Le cas de la figure 8 représente une variante de réalisation d'un dispositif d'éclairage 23 à diodes 27 montées en position "extrados", c'est-à-dire dirigées vers l'intérieur du dispositif. Elles émettent un rayonnement se réfléchissant directement sur le réflecteur 30, parabolique ou hyperbolique.

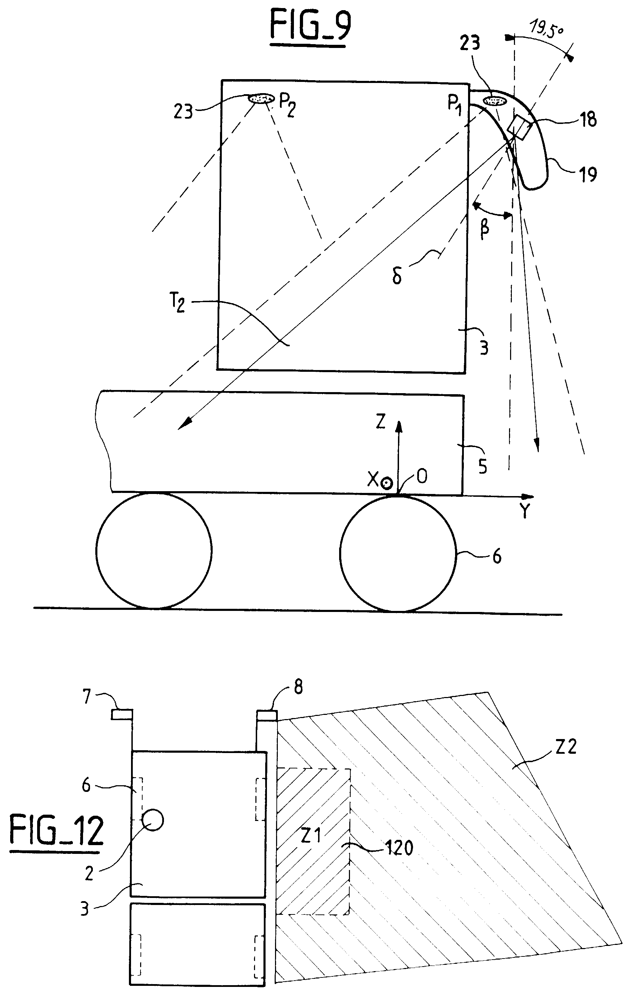

La figure 9 est une vue schématique latérale de la cabine de pilotage 3 d'un véhicule industriel, montée sur le châssis 5 relié aux roues 6. La caméra 18 intégrée dans le bras d'un rétroviseur latéral, est orientée vers l'arrière du véhicule, en plus de son orientation vers l'extérieur de la cabine selon un angle α par rapport à la verticale. Ainsi, l'axe de visée δ de la caméra forme aussi un angle β aigu avec l'axe vertical ZZ', dans un plan parallèle au côté de la cabine 3 passant par le centre de gravité de la caméra. Cet angle β est égal par exemple à 19,5 degrés, dans le cas particulier défini pour la figure 6. La trace du champ de vision d'accostage dans ce plan parallèle est représentée par un triangle T₂ sur cette figure 9. L'inclinaison de la caméra permet de couvrir totalement la zone 12 de vision d'accostage réglementaire, représentée sur les figures 2 et 3, ainsi que l'angle mort 16 précédemment décrits, le long des roues 6 de la cabine de pilotage.
Comme le montre cette figure 9, le dispositif d'éclairage peut être placé soit en position P₁, c'est-à-dire intégré dans le bras du rétroviseur 19, à côté de la caméra 18, soit en position P₂, c'est-à-dire intégré dans la carrosserie de la cabine de pilotage 3.

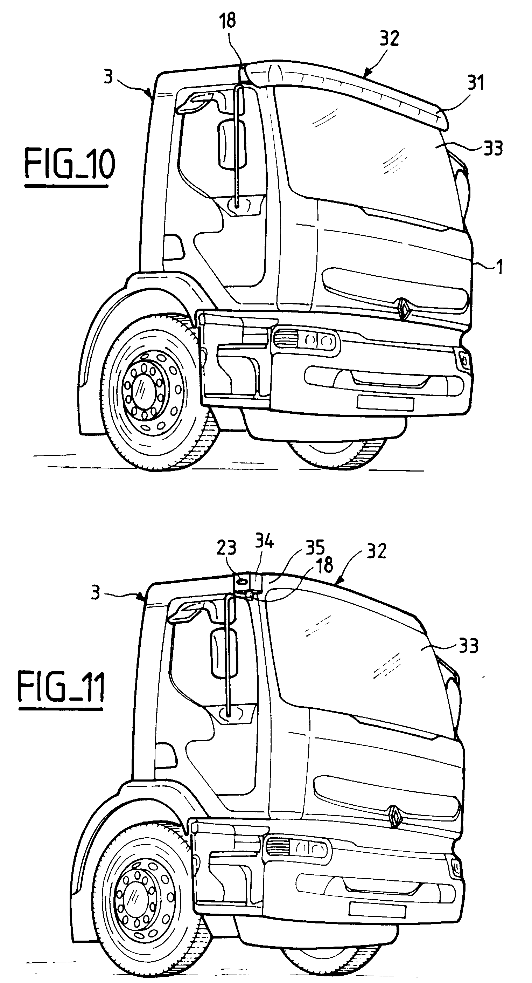

La figure 10 concerne un autre mode de réalisation du système de vision d'accostage, sur un véhicule industriel équipé d'une visière pare-soleil 31 fixée au niveau supérieur du pavillon 32 de la cabine de pilotage 3, devant le pare-brise 33. Cette visière pare-soleil dépasse de part et d'autre de la cabine, dans les limites autorisées par la réglementation, de façon à pouvoir loger une caméra 18, et au besoin un dispositif d'éclairage 23 par diodes. La caméra est positionnée selon les mêmes coordonnées cartésiennes que celles définies à propos du mode de réalisation décrit aux figures 6 et 9, avec la même inclinaison selon les angles α et β précédents. Les autres éléments constitutifs du système selon l'invention, soit l'écran vidéo 22, le dispositif d'éclairage 23 et les moyens électroniques 24 de contrôle, sont identiques à ceux décrits précédemment.

La figure 11 concerne un troisième mode de réalisation du système de vision d'accostage, sur un véhicule industriel équipé d'un boîtier 34 de signalisation extérieure de changement de direction, par feux clignotants par exemple, fixé au coin supérieur 35 de la cabine de pilotage 3 au niveau du pavillon 32. Ce boîtier dépasse de part et d'autre de la cabine, dans les limites autorisées par la réglementation, aussi est-il possible d'y loger une caméra 18, et au besoin un dispositif d'éclairage 23 par diodes. Là encore, la caméra est positionnée selon les mêmes coordonnées cartésiennes que celles définies à propos du mode de réalisation décrit aux figures 6 et 9, avec la même inclinaison selon les angles α et β précédents.

La figure 12 est une vue schématique de dessus d'un véhicule industriel équipé d'un système de vision d'accostage avec la caméra 18. Sont représentées d'une part, la zone z₁ de couverture au sol du champ de vision classique par miroir, de trace au sol référencée 120, et d'autre part la zone z₂ de couverture au sol par la caméra d'accostage, de superficie considérablement plus grande.

De plus, le système de vision d'accostage par caméra permet de couvrir également l'angle mort 16 précédemment défini. Le système offre comme avantage un champ de vision plus complet qu'un rétroviseur grand angle, sans angle mort, associé à un miroir d'accostage qui laissent un volume non visible par le conducteur, situé du côté du passager, à l'extérieur de la cabine, compris entre le sol et la limite du champ de vision directe donnée par le miroir d'un rétroviseur grand angle.

## Revendications

1. Système de vision d'accostage d'un véhicule industriel, doté d'un équipement extérieur dont une partie au moins dépasse du coin avant du pavillon supérieur de la cabine de pilotage placé du côté opposé au conducteur, et d'un rétroviseur portant au moins un miroir principal de rétrovision et un miroir grand angle adjacents, placé du côté opposé au conducteur, caractérisé en ce qu'il comporte :
- une caméra électronique numérique (18) intégrée dans l'équipement extérieur, de dimensions et de poids faibles par rapport à ceux de l'équipement, avec un objectif orienté vers le sol, le long de la cabine de pilotage, de façon à couvrir totalement une zone d'ombre (12) située sous le champ de vision latérale du conducteur et le volume de l'angle mort (16) du miroir principal (8) de rétrovision combiné avec le miroir grand angle (17) le long des roues (6) de la cabine de pilotage (3) ;
- un moniteur vidéo (22) ou écran de type à cristaux liquides, placé à l'intérieur de la cabine de pilotage (3) ;
- un dispositif d'éclairage d'accostage (23), fixé à l'extérieur de la cabine et destiné à éclairer le sol observé par la caméra pendant la nuit ;
- des moyens électroniques (24) de contrôle du fonctionnement du système, soit de l'alimentation électrique de la caméra, de l'écran et du dispositif d'éclairage, à partir de la batterie du véhicule, et de la visualisation et/ou de la commutation des signaux vidéo.

2. Système de vision d'accostage selon la revendication 1, caractérisé en ce que, dans le repère cartésien automobile (O, X, Y, Z), dont l'origine (O) est au point de concours de l'axe (XX') horizontal, parallèle à l'axe longitudinal du véhicule passant dans le plan inférieur du châssis, de l'axe (YY') horizontal confondu avec l'axe de l'essieu avant, et de l'axe (ZZ') vertical passant par le milieu de l'essieu avant, la caméra (18) de vision d'accostage est orientée vers le sol de telle sorte que son axe de visée (δ) fasse un angle aigu (α), avec l'axe vertical (ZZ') dans le plan perpendiculaire au plan latéral de la cabine de pilotage et passant par le centre de gravité de la caméra.

3. Système de vision d'accostage selon la revendication 1, caractérisé en ce que, dans le repère cartésien automobile (O, X, Y, Z), dont l'origine (O) est au point de concours de l'axe (XX') horizontal, parallèle à l'axe longitudinal du véhicule passant dans le plan inférieur du châssis, de l'axe (YY') horizontal confondu avec l'axe de l'essieu avant, et de l'axe (ZZ') vertical passant par le milieu de l'essieu avant, la caméra (18) de vision d'accostage est orientée vers le sol de telle sorte que son axe de visée (δ) fasse un angle aigu (β) avec l'axe vertical (ZZ'), dans un plan parallèle au côté de la cabine (3) passant par le centre de gravité de la caméra (18).

4. Système de vision d'accostage d'un véhicule industriel équipé d'un rétroviseur à bras en suspension portant au moins un miroir principal de rétrovision et un miroir grand angle adjacents, placé du côté opposé au conducteur, selon l'une des revendications 1 à 3, caractérisé en ce que la caméra électronique numérique (18) est intégrée dans le bras du rétroviseur (19), de dimensions et de poids faibles par rapport à ceux du rétroviseur, avec un objectif orienté vers le sol, le long de la cabine de pilotage, de façon à couvrir totalement une zone d'ombre (12) située sous le champ de vision latérale (11) du conducteur et le volume de l'angle mort (16) du miroir (8) principal de rétrovision combiné avec le miroir grand angle (17) le long des roues (6) de la cabine de pilotage (3).

5. Système de vision d'accostage d'un véhicule industriel équipé d'une visière pare-soleil (31) fixée au niveau supérieur du pavillon (32) de la cabine de pilotage (3), devant le pare-brise (33), et dont au moins une partie latérale dépasse de part et d'autre de la cabine, dans les limites autorisées par la réglementation, selon l'une des revendications 1 à 3, caractérisé en ce que la caméra électronique numérique (18) est intégrée dans la partie latérale de la visière pare-soleil (31), du côté opposé au conducteur, de dimensions et de poids faibles par rapport à ceux de la visière, avec un objectif orienté vers le sol, le long de la cabine de pilotage, de façon à couvrir totalement une zone d'ombre (12) située sous le champ de vision latérale (11) du conducteur et le volume de l'angle mort (16) du miroir (8) principal de rétrovision combiné avec le miroir grand angle (17) le long des roues (6) de la cabine de pilotage (3).

6. Système de vision d'accostage d'un véhicule industriel équipé d'un boîtier (34) de signalisation extérieure de changement de direction, par feux clignotants par exemple, fixé au coin supérieur (35) de la cabine de pilotage (3) au niveau du pavillon supérieur (32), du côté opposé au conducteur, et dépassant de part et d'autre de la cabine, dans les limites autorisées par la réglementation, selon l'une des revendications 1 à 3, caractérisé en ce que la caméra électronique numérique (18) est intégrée dans le boîtier (34) de signalisation extérieure, de dimensions et de poids faibles par rapport à ceux du boîtier, avec un objectif orienté vers le sol, le long de la cabine de pilotage, de façon à couvrir totalement une zone d'ombre (12) située sous le champ de vision latérale (11) du conducteur et le volume de l'angle mort (16) du miroir (8) principal de rétrovision combiné avec le miroir grand angle (17) le long des roues (6) de la cabine de pilotage (3).

7. Système de vision d'accostage selon la revendication 1, caractérisé en ce que le dispositif d'éclairage d'accostage (23) est constitué d'un réseau de diodes électroluminescentes linéaire ou matriciel.

8. Système de vision d'accostage selon la revendication 7, caractérisé en ce que les diodes électroluminescentes (27) sont montées de telle sorte que leur rayonnement est dirigé vers l'extérieur du boîtier (28) d'éclairage.

9. Système de vision d'accostage selon la revendication 7, caractérisé en ce que les diodes électroluminescentes (27) sont montées de telle sorte que leur rayonnement est dirigé vers l'intérieur du boîtier (28) d'éclairage.

10. Système de vision d'accostage selon la revendication 1, caractérisé en ce que, dans le cas où le véhicule est équipé d'une source d'images vidéo (25) auxiliaire, telle qu'un lecteur de bande magnétique ou magnétoscope analogique ou numérique ou lecteur de disques compacts de type CD ROM, il comprend de plus des moyens (26) de commutation des signaux vidéo, destiné à l'aiguillage des signaux provenant de la caméra numérique (18) ou de ceux provenant de la source vidéo auxiliaire (25), qui doit également être alimentée électriquement par l'intermédiaire des moyens électroniques (24) de contrôle.

11. Système de vision d'accostage selon la revendication 10, caractérisé en ce que, par l'intermédiaire des moyens électroniques (24) de contrôle, un signal de consigne (C_{O}) permet de sélectionner les images vidéo qui doivent être affichées sur l'écran (22) en provenance soit de la caméra numérique (18), soit de la source vidéo auxiliaire (25), cette consigne (C_{O}) permettant de commuter l'une ou l'autre des entrées (E_{C} ou E_{S}) reliées respectivement à la caméra (18) et à la source auxiliaire (25) pour que la sortie (S) des moyens électroniques (24) de contrôle envoie les images sur l'écran (22), à la condition que le moteur du véhicule soit arrêté pour pouvoir sélectionner la source vidéo auxiliaire (25).

12. Système de vision d'accostage selon la revendication 1, caractérisé en ce que le moniteur vidéo (22) est monté sur un dispositif rabattable vers le plafonnier ou vers la planche de bord de la cabine de pilotage (3), lorsque le conducteur n'a pas besoin de la vision d'accostage.

13. Système de vision d'accostage selon la revendication 2, caractérisé en ce que, dans le cas particulier où les coordonnées cartésiennes du centre de gravité de la caméra sont x = 1000 mm, y = 1700 mm et z = 2700 mm, l'angle aigu (α), que fait l'axe de visée de la caméra (18) de vision d'accostage avec l'axe vertical (ZZ') dans le plan perpendiculaire au plan latéral de la cabine de pilotage et passant par le centre de gravité de la caméra, est égal à 16,7 degrés.

14. Système de vision d'accostage selon la revendication 3, caractérisé en ce que, dans le cas particulier où les coordonnées cartésiennes du centre de gravité de la caméra sont x = 1000 mm, y = 1700 mm et z = 2700 mm, l'angle aigu (β) que fait l'axe de visée de la caméra (18) de vision d'accostage avec l'axe vertical (ZZ'), dans un plan parallèle au côté de la cabine (3) passant par le centre de gravité de la caméra (18), est égal à 19,5 degrés.
